# EUROPÄISCHE PATENTSCHRIFT

(11) **EP 1 071 934 B1**
(45) Veröffentlichungstag und Bekanntmachung des Hinweises auf die Patenterteilung: **13.02.2002**
(21) Anmeldenummer: 99920632.9
(22) Anmeldetag: 09.04.1999
(51) Int. Cl.: G01L 9/00

(54) **KAPAZITIVE DRUCK- ODER KRAFTSENSORSTRUKTUR UND VERFAHREN ZUR HERSTELLUNG DERSELBEN**
CAPACITIVE PRESSURE OR FORCE SENSOR STRUCTURE AND METHOD FOR PRODUCING THE SAME
STRUCTURE CAPACITIVE DETECTRICE DE PRESSION OU DE FORCE ET SON PROCEDE DE PRODUCTION

(30) Priorität: 09.04.1998 DE 19816152; 03.06.1998 DE 19824778
(43) Veröffentlichungstag der Anmeldung: 31.01.2001
(73) Patentinhaber: Plöchinger, Heinz, 4785 Freinberg (AT)
(72) Erfinder: Plöchinger, Heinz, 4785 Freinberg (AT)
(74) Vertreter: Zimmermann, Tankred Klaus
(86) Internationale Anmeldenummer: EP9902431
(87) Internationale Veröffentlichungsnummer: WO9953286

(56) Entgegenhaltungen:
- EP-A- 0 195 985
- WO-A-93/11415
- WO-A-95/03534
- DE-U- 9 013 959
- US-A- 4 977 480

## Beschreibung

Die vorliegende Erfindung bezieht sich allgemein auf die Sensorik und insbesondere auf kapazitive Druck- oder Kraftsensoren zur Messung physikalischer Größen wie Kraft, Absolutdruck, Differenzdruck, Auslenkung, Abstand und dergleichen.

Bei kapazitiven Sensoren, wie sie beispielsweise in dem europäischen Patent 0 461 459 beschrieben sind, ist der Kennlinienverlauf, d. h. das Drucksensorausgangssignal als Funktion der zu messenden Größe, im wesentlichen durch deren mechanische Eigenschaften bestimmt. Das heißt, daß die Verformung einer auslenkbaren Membran über einer Grundstruktur oder die Verschiebung eines Biegebalkens in Folge einer äusseren Kraft den Kennlinienverlauf direkt festlegt, wenn eine flächige Elektrode an dem beweglichen Element einer flächigen Elektrode an dem festen Element gegenüber liegt.

In der WO 90/12299 ist ein kapazitiver Drucksensor beschrieben, bei dem das auslenkbare Element, d. h. die Membran, eine einzige flächige Elektrode aufweist, während auf der Grundstruktur bereits drei Elektroden vorgesehen sind, von denen eine unabhängig vom angelegten Druck ein konstantes Ausgangssignal liefert, während die beiden anderen Elektroden zusammen mit der an der Membran angebrachten Elektrode jeweils zwei kapazitive Ausgangssignale liefern, welche bei gleicher angelegter Kraft unterschiedlich sind.

Aus dem deutschen Patent 41 07 345 ist ebenfalls eine Druckmessanordnung bekannt, bei der sowohl eine Membran als auch die derselben gegenüberliegende Struktur bereits mehrere Kapazitäten aufweisen, die bei gleicher Auslenkung der Membran zu unterschiedlichen kapazitiven Ausgangssignalen führen. Nachteilig an dieser Anordnung ist zum einen die relativ komplizierte Form der einzelnen Elektroden. Die Elektrodenform ist zudem nicht direkt durch geometrische Daten, wie z. B. Winkel und zugehörige Radien, zu beschreiben. Zum anderen müssen für unterschiedliche Anwendungen die Elektrodenflächen sowohl der Membran als auch der Auflagestruktur neu gestaltet werden. Außerdem ist es bei der beschriebenen Anordnung erforderlich, daß sowohl alle Elektroden der Auflagestruktur als auch alle Elektroden der Membran einzeln kontaktiert werden müssen, damit sichergestellt wird, daß die einzelnen Messkapazitäten auf unterschiedlichen Potentialen liegen, um eine rückgekoppelte Auswerteschaltung verwenden zu können, die auf dem Switched-Capacitor-Prinzip aufbaut.

Die WO33/11415 offenbart eine kapazitive Druckmeßanordnung mit hoher Linearität. Die Druckmeßanordnung umfaßt eine erste und eine zweite Meßkapazität, so wie zwei druckabhängige Kapazitäten. Die Elektrodenflächen zur Definition der Meßkapazitäten und der druckabhängigen Kapazitäten sind geeignet gestaltet, um ein lineares Ausgangs- signal zu erhalten. Die Drucksensorstruktur umfaßt ferner zwei Referenzkapazitäten, wobei sämtliche Kapazitäten mittels einer äußeren Schaltungsanordnung miteinander verschaltet werden, derart, daß die beiden Meßkapazitäten und die beiden Referenzkapazitäten in einer Brückenschaltung miteinander verschaltet sind, während die beiden weiteren druckabhängigen Kapazitäten jeweils in den Rückkopplungs- zweigen eines Differenzverstärkers zu finden sind. Die Gegenstruktur hat dieselbe Elektrodenflächenkonfiguration wie die Membranstruktur, damit es möglich ist, sämtliche Kapazitäten auf unterschiedliche Potentiale zu legen. Jede Elektrodenfläche kann durch einzelne Teilelektrodenflächen oder durch eine durchgehende Elektrodenfläche realisiert werden.

Die WO 95/03534 offenbart kapazitive Drucksensoren mit hoher Linearität. Eine kammerseitige Fläche einer Membraa zur Druckmessung ist mit einer Referenz- und einer Meßelektrode bedeckt. Die Gegenstruktur weist eine durchgehende Elektrode auf, so daß zwischen den Elektrodenstrukturen und der ganzflächigen Elektrode einzelne Kapazitäten gebildet werden, die jeweils einen Anschluß haben, der auf dem gleichen Potential liegt.

Das US-Patent Nr. 4,977,480 offenbart einen Sensor vom Kapazitätstyp, bei dem ein Kondensator mit konstanter Kapazität zu einem Kondensator mit variabler Kapazität in Serie geschaltet ist. Die Kapazität des Kondensators mit variabler Kapazität variiert mit einem an den Sensor angelegten Druck. Der Kondensator mit variabler Kapazität umfaßt eine bewegbare Elektrode auf einer Membran und eine feste Elektrode, die gegenüber der bewegbaren Elektrode angeordnet ist. Die feste Gegenelektrode ist ferner strukturiert, daß eine weitere Gegenelektrode gebildet ist, um eine weitere variable Kapazität zu bilden, die zu der anderen Kapazität parallel geschaltet ist. Ein weiterer Kondensator mit variabler Kapazität ist seriell zu einem Kondensator mit konstanter Kapazität geschaltet. Sämtliche Kapazitäten umfassen eine Elektrode auf der Membran und eine andere Elektrode auf der Gegenstrukur bzw. im Falle der festen Kapazitäten eine von der Meßkammer entfernte Kapazität.

Die EP 0 195 985 offenbart einen kapazitiven Drucksensor mit einer gemeinsamen ersten Elektrode auf einer Membran und mit einer zweiten und einer dritten Elektrode, die der ersten Elektrode gegenüberliegen, auf einer Gegenstruktur. Sowohl die Elektroden auf der Gegenstruktur als auch die Elektrode auf der Membran sind kontaktiert, um zwei druckempfindliche Kondensatoren zu bilden, deren Kapazitätsänderung in Abhängigkeit vom Druck jeweils gleich groß ist.

Die DE-U-9013959 bezieht sich auf einen Sensor für ein Kapazitätsmanometer. Das Manometer umfaßt eine Basisscheibe und eine mit derselben verbundene Membran. Auf der Innenseite der Basisscheibe sind mindestens zwei separate metallische Schichtabschnitte vorgesehen, die mit elektrisch miteinander verbundenen metallischen Schichtabschnitten auf der Membran zwei in Reihe geschaltete Kapazitäten bilden, deren Anschlüsse an der Basisscheibe vorgesehen sind. Bei diesem Sensor ist es nicht mehr erforderlich, die Membran mit elektrischen Kontakten auszurüsten.

Die Aufgabe der vorliegenden Erfindung liegt darin, ein Konzept zu schaffen, das eine einfache und flexibel einsetzbare Druck- oder Kraftsensorstruktur schafft, deren Kennlinienverlauf mit einem gewünschten Kennlinienverlauf in Übereinstimmung gebracht werden kann.

Diese Aufgabe wird durch eine Druck- oder Kraftsensorstruktur gemäß Anspruch 1 sowie durch ein Verfahren zum Herstellen einer Druck- oder Kraftsensorstruktur gemäß Anspruch 15 gelöst.

Vorteilhafte Ausbildungen der Struktur und des Verfahrens sind den abhängigen Ansprüchen entnehmbar.

Eine erfindungsgemäße Druck- oder Kraftsensorstruktur umfaßt eine Membran und eine Gegenstruktur, wobei auf der Membran und der Gegenstruktur jeweils Elektroden zur Festlegung von Kondensatoren vorgesehen sind. Zur Festlegung einer gewünschten Druck/Kapazität-Abhängigkeit bzw. Kraft/Kapazität-Abhängigkeit sind wenigstens zwei der Kondensatoren seriell oder parallel geschaltet.

Der vorliegenden Erfindung liegt die Erkenntnis zugrunde, daß zum Erreichen einer Unabhängigkeit des Kennlinienverlaufs mehrere einzelne Kapazitäten durch entsprechende Elektrodenkonfigurationen in einer Druck- oder Kraftsensorstruktur vorgesehen werden, welche bei gleicher Auslenkung eine unterschiedliche Kapazität liefern. Durch Parallel- oder Seriell-Schalten dieser Kondensatoren kann dann ein kombinierter Kapazitätsverlauf als Funktion der Auslenkung der Membran erhalten werden, der einem gewünschten Verlauf entspricht. Dies bedeutet also, daß der gewünschte Kapazitätsverlauf zum einen durch eine geometrische Formung der Kondensatorelektroden im kapazitiven Sensor und zum anderen durch ein Verschalten von zumindest zwei Kondensatoren erhalten wird, welche entsprechend geformt sind. Somit existieren zumindest zwei Freiheitsgrade, um eine gewünschte Abhängigkeit zu erhalten.

Vorzugsweise werden viele Kondensatoren durch viele entsprechend geformte Elektroden festgelegt, die dann mittels einer Auswerteschaltung mit Rückkopplungseigenschaft geeignet verbunden werden, wodurch auch sehr komplizierte und besonders auch nichtlineare gewünschte Druck/Kapazitäts-Abhängigkeiten bzw. Kraft/Kapazitäts-Abhängigkeiten nachgebildet werden können.

Ein Vorteil der vorliegenden Erfindung besteht ferner darin, daß sie für verschiedene Anwendungen, d. h. verschiedene Abhängigkeiten eingesetzt werden kann, ohne wesentlich modifiziert zu werden. Zu diesem Zweck ist entweder die Membran oder die Gegenstruktur und vorzugsweise die Gegenstruktur mit einer Vielzahl von kreissegmentförmigen Elektrodenflächen (wenn z. B. eine kreisförmige Membran bzw. Gegenstruktur betrachtet wird) versehen, die zusammen mit kreissegmentförmigen Flächen der Membran Kondensatoren festlegen, wobei durch Parallel- oder Seriell-Schalten verschiedener Kondensatoren beliebige gewünschte Elektrodenflächen, die bei einer vorausgegangenen numerischen Simulation berechnet worden sind, gewissermaßen "zusammengesetzt" werden können. Dies liefert besonders bei einer Verwendung eines Mehrschichtaufbaus für die Gegenstruktur ein außerordentlich flexibles Konzept, da die Metallisierungsstrukturierung sowohl der Membran als auch der Gegenstruktur und die eingesetzte Auswerteschaltung für jede Anwendung, d. h. für jede Druck/Kapazitäts-Abhängigkeit bzw. Kraft/Kapazitäts-Abhängigkeit gleich sind, während die Parallelschaltung einzelner Kondensatoren, d. h. die "Zusammensetzung" der berechneten Elektrodenflächen, lediglich durch die Mehrschichtstrukturierung der Gegenstruktur oder auch der Membran bewirkt wird. Die Flächenauflösung, d. h. die Form der "zusammensetzbaren" Flächen wird durch die Anzahl der einzelnen Elektrodenflächen und der gegenüberliegenden Elektrodenflächen des anderen Elements der Druck- oder Kraftsensorstruktur festgelegt. Werden genügend kleine Elektrodenflächen vorgesehen, so sind entsprechende numerisch berechnete Elektrodenflächen nahezu beliebig zusammensetzbar, indem entsprechende Kondensatorelemente parallel geschaltet werden.

Zur Reduzierung des damit ansteigenden Kontaktierungsaufwands wird erfindungsgemäß ein Konzept verwendet, bei dem nicht, wie bisher beim Stand der Technik die Elektroden sowohl der Membran als auch der Gegenstruktur kontaktiert werden müssen, sondern lediglich entweder die Membran oder die Gegenstruktur kontaktiert werden. Dies trägt dazu bei, daß die Membran und die Gegenstruktur für jede erwünschte Abhängigkeit eine gleiche Metallisierung aufweisen, da die sozusagen makroskopische Gestaltung der Elektroden lediglich durch Zusammenschaltung einzelner Elementarkondensatoren vorzugsweise unter Verwendung einer Mehrschichtstrukturierung an nur einem Element bewirkt wird.

Nicht zu unterschätzen ist ferner die Tatsache, daß für alle erwünschten Abhängigkeiten lediglich eine Auswerteschaltung in Form einer elektronischen integrierten Schaltung eingesetzt werden kann, die für alle erwünschten Abhängigkeiten die gleiche ist und daher in hohen Stückzahlen und somit preisgünstig hergestellt werden kann. Für kapazitive Druck- oder Kraftsensorstrukturen ist dies besonders wichtig, da dieselben zumeist in hohen Stückzahlen an vielen Stellen eines Systems eingesetzt werden. Die Mehrschichtstrukturierung ist, besonders wenn sie am feststehenden Element der Druck- oder Kraftsensorstruktur angebracht wird, bzw. dieses sogar bildet, aus sehr günstigen Materialien und aufgrund der sehr hoch entwickelten Mehrschichttechnologie ebenfalls trotz der anderen Gestaltung für jede Abhängigkeit sehr preisgünstig herstellbar.

Bevorzugte Ausführungsbeispiele der vorliegenden Erfindung werden nachfolgend bezugnehmend auf die beiliegenden Zeichnungen detailliert erläutert. Es zeigen:
- Fig. 1: eine Prinzipdarstellung zur Veranschaulichung des Prinzips, wenn nur ein Element kontaktiert wird;
- Fig. 2: eine schematische Darstellung entweder der Gegenstruktur oder der Membran der erfindungsgemäßen Druck- oder Kraftsensorstruktur;
- Fig. 3: einen Querschnitt durch die in Fig. 2 dargestellte Struktur;
- Fig. 4: einen Querschnitt durch die erfindungsgemäße Druck- oder Kraftsensorstruktur, bei der ein elektrisches Abschirmgitter verwendet wird;
- Fig. 5: ein vereinfachtes Schaltbild einer Auswertungsschaltung, die auf vorteilhafte Weise mit der Druck- oder Kraftsensorstruktur der vorliegenden Erfindung eingesetzt werden kann;
- Fig. 6: ein Beispiel für eine erfindungsgemäße Druck- oder Kraftsensorstruktur an einem Biegebalken;
- Fig. 7a: eine Druck- oder Kraftsensorstruktur mit zwei kreisförmigen Membranen für eine zweiseitige Messung;
- Fig. 7b: eine erfindungsgemäße Druck- oder Kraftsensorstruktur mit nur einer Membran und einer feststehenden Gegenstruktur;
- Fig. 8a: eine numerische Simulation des Abstands der Membran von der Gegenstruktur für die in Fig. 7b gezeigte Struktur;
- Fig. 8b: eine numerische Simulation der Kapazität eines Flächenelements in Abhängigkeit vom angelegten Druck und vom Abstand vom Zentrum der Struktur von Fig. 7b;
- Fig. 9a: das Füllvolumen eines liegenden Zylinders in Abhängigkeit von der Füllstandshöhe zur Erläuterung des Nachbildens einer nichtlinearen Kennlinie;
- Fig. 9b: einen Vergleich zwischen der realisierten Abhängigkeit mit der gewünschten Abhängigkeit einer erfindungsgemäßen Druck- oder Kraftsensorstruktur; und
- Fig. 10: eine schematische Draufsicht auf eine Gegenstruktur einer erfindungsgemäßen Druck- oder Kraftsensorstruktur, die die in Fig. 9b dargestellte Übertragungsfunktion realisiert.

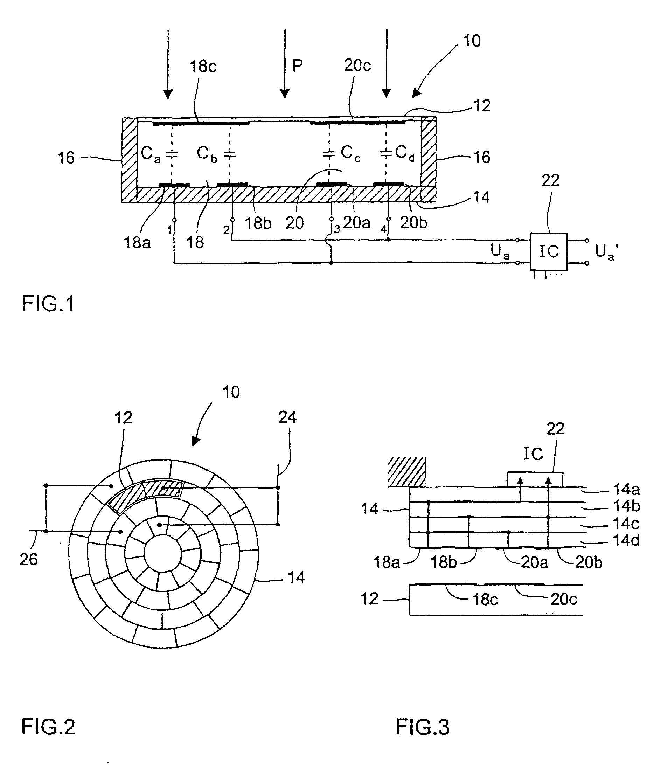

Fig. 1 zeigt eine schematische Ansicht einer Druck- oder Kraftsensorstruktur 10 mit einer Membran 12 und einer Gegenstruktur 14. Es sei darauf hingewiesen, daß in Fig. 1 lediglich aus Darstellungsgründen ein Fall gezeigt ist, bei dem die Gegenstruktur 14 fest ist, während die Membran als beweglich, d. h. als verformbar, eingezeichnet ist. Die Membran 12 wird gegenüber der Auflagestruktur 14 mittels einer vorzugsweise starren Halteeinrichtung 16 gehalten, damit bei angelegtem Druck P eine Durchbiegung der Membran 12 in Richtung der Gegenstruktur 14 auftritt. Es ist offensichtlich, daß die Durchbiegung in der Mitte wesentlich stärker sein wird als am Randbereich.

Zur Erfassung der Durchbiegung auf kapazitive Art und Weise sind in Fig. 1 zwei Kondensatoren 18, 20 dargestellt. Der Kondensator 18 umfaßt einen Anschluß 1 sowie eine erste und eine zweite Elektrodenfläche 18a, 18b, die auf der Gegenstruktur 14 aufgebracht sind, sowie eine dritte Elektrodenfläche 18c, die derart bezüglich der ersten und der zweiten Elektrodenfläche 18a, 18b an der Membran 12 angeordnet ist, daß zwischen der ersten Elektrodenfläche 18a und der dritten Elektrodenfläche eine erste Kapazität Cₐ vorhanden ist, während zwischen der zweiten Elektrodenfläche 18b und der dritten Elektrodenfläche 18c eine weitere Kapazität C_{b} vorhanden ist. Die an den Anschlüssen 1 und 2 meßbare Kapazität des Kondensators 18 besteht somit aus einer Serienschaltung zwischen den einzelnen Kapazitäten Cₐ und C_{b}. Für Fachleute ist es offensichtlich, daß zwischen der ersten und der zweiten Elektrodenfläche ferner eine Streukapazität vorhanden sein kann, die von der Auslenkung der Membran 12 im wesentlichen unbeeinflußt ist. Diese Streukapazität sollte klein sein, um eine Kapazitätsänderung aufgrund der Auslenkung der Membran nicht zu verdecken. Dies ist jedoch meistens erfüllt, da der Abstand zwischen Membran und Gegenstruktur üblicherweise sehr klein ist.

Der zweite Kondensator 20 ist analog zum ersten Kondensator 18 aufgebaut und umfaßt ebenfalls eine erste und eine zweite Elektrodenfläche 20a, 20b sowie eine dritte Elektrodenfläche 20c. Die an den Anschlüssen 3 und 4 meßbare Kapazität des Kondensators 20 setzt sich somit ebenfalls aus einer Serienschaltung einer ersten Kapazität C_{c} zwischen der ersten Elektrodenfläche 20a und der dritten Elektrodenfläche 20c, die an der Membran 12 angebracht ist, und einer Kapazität C_{d} zusammen, die zwischen der zweiten Elektrodenfläche 20b an der Gegenstruktur 14 und der dritten Elektrodenfläche 20c an der Membran 12 gebildet ist.

Das in Fig. 1 gezeigte Kondensatorkonzept hat den entscheidenden Vorteil, daß lediglich die Gegenstruktur 14 mit Kontakten versehen werden muß, während das aktive Element d. h. die Membran 12, die sich bei angelegtem Druck P auslenkt, keinerlei Kontakte benötigt. Damit ist eine wesentliche Vereinfachung erreicht. Außerdem ist es bei entsprechender Gestaltung der Membran möglich, daß für jede Abhängigkeit die gleiche Membran eingesetzt wird, wie es weiter hinten beschrieben ist. Die Kontaktierung der ersten und zweiten Elektrodenflächen 18a, 18b und 20a, 20b kann auf der bezüglich Fig. 1 unteren Seite der Gegenstruktur beispielsweise mittels Leiterbahnen bewerkstelligt werden, oder aber mittels einer Mehrschichtstruktur wie es ebenfalls weiter hinten beschrieben ist.

Zum Erreichen einer gewünschten Kapazitätsabhängigkeit der Druck- oder Kraftsensorstruktur 10 können nun die beiden Kondensatoren 18, 20, die abhängig von der erwünschten Anwendung an irgendeiner Stelle bezüglich der Membran 12 plaziert sein werden, seriell oder parallel verschaltet werden, um ein Sensorausgangssignal Uₐ mit der gewünschten Abhängigkeit zu erhalten. Lediglich vorzugsweise kann das direkte Sensorausgangssignal Uₐ mit einer integrierten Schaltung IC 22 verarbeitet werden, um ein verarbeitetes Ausgangssignal Uₐ' zu erhalten. Für Fachleute ist es offensichtlich, daß integrierte Schaltungen 22 üblicherweise mehr als zwei Eingänge für eine einzige Spannung haben, wodurch die Ausgangssignale mehrere verschalteter Kondensatoren auf beliebige Weise kombiniert werden können. Weiterhin können und werden vorzugsweise auch mehr als zwei Kondensatoren parallel oder seriell oder sowohl seriell als auch parallel miteinander verschaltet, um eine erwünschte Abhängigkeit bzw. auch eine der Anwendung angepaßte Empfindlichkeit der Druck- oder Kraftsensorstruktur 10 zu erhalten. Weiterhin werden die einzelnen Elektrodenflächen 18a - 18c und 20a - 20c vorzugsweise geeignet auf der Membran bzw. der Auflagestruktur strukturiert, um allein aufgrund der Elektrodenformung schon einen Kapazitätsverlauf zu erhalten, der dann zusammen mit der Zusammenschaltung der Kondensatoren den gewünschen Druck/Kapazitäts- bzw. Kraft/Kapazitäts-Verlauf, d. h. ein bestimmtes Ausgangssignal Uₐ als Funktion des angelegten Drucks P, ergibt.

Im allgemeinen wird eine Parallelschaltung von Kondensatoren gegenüber einer Serienschaltung eher bevorzugt, da bei einer Serienschaltung von Kondensatoren immer die kleinere Kapazität den dominierenden Einfluß hat, was unter Umständen zu Empfindlichkeitsverlusten führen kann. Außerdem erlaubt die Parallelschaltung von Kondensatoren die einfache "Zusammensetzung" von "makroskopischen" Elektrodenflächen aus "mikroskopischen" Elektrodenflächen.

Fig. 2 zeigt eine Draufsicht auf eine bevorzugte Ausführungsform der erfindungsgemäßen Druck- oder Kraftsensorstruktur 10, wobei besonderes Augenmerk auf die Metallisierung der Auflagestruktur 14 gelegt wurde. Die Membran 12 ist dagegen lediglich durch eine dritte Elektrodenfläche 18c bzw. 20c angedeutet. Aus Fig. 2 ist ersichtlich, daß die Auflagestruktur 14 eine Vielzahl von kreissegmentförmigen Elektrodenflächen aufweist, welche mittels einer entsprechenden Elektrode in der Membran 12 verschaltet werden können, um Kondensatoren zu ergeben. Schematische Verbindungen 24 und 26 zeigen eine Zusammenschaltung zweier Kondensatoren, um eine erste Gruppe zu bilden (24) bzw. um eine zweite Gruppe (26) zu bilden. Es sei darauf hingewiesen, daß die einzelne Elementarform der Elektrodenflächen, die in Fig. 2 kreissegmentartig ist, eine beliebige andere Form annehmen kann. Für kreisrunde Membranen bietet sich jedoch eine kreissektorförmige Gestaltung an.

Weiterhin ist es nicht erforderlich, daß zwei auf ein und demselben Kreisring angeordnete Elektrodenflächen zusammen mit einer entsprechend geformten Elektrodenfläche der Membran einen Kondensator bilden. Es ist ebenfalls möglich, daß Kondensatoren durch Elektrodenflächen in verschiedenen Kreisringen gebildet werden. Außerdem ist es nicht erforderlich, daß die Zusammenschaltungen der Kondensatoren lediglich in einem Kreisquadranten erfolgt. Die Leiterstrukturen 24 und 26 können beliebig gestaltet werden, wobei es prinzipiell auch denkbar wäre, daß ein Kondensator, der, wie es in Fig. 1 dargestellt wurde, aus drei Elektrodenflächen besteht, von denen zwei auf einem Element und das Dritte auf einem anderen Element der Sensorstruktur 10 ist, in beiden Gruppen vorhanden ist. Außerdem können beliebigen Gruppen, also auch mehr als zwei Gruppen von zusammengeschalteten Kondensatoren gebildet werden, jenachdem welche Abhängigkeit erwünscht ist, bzw. welche Auswerteschaltung 22 zur Verfügung steht. Außerdem ist die Anzahl der Ringe mit Elektrodenflächen beliebig wählbar, wobei eine beliebig genaue Flächenzusammensetzung durch eine beliebig kleine Dimensionierung der elementaren Elektrodenflächen erreicht wird.

Selbstverständlich müssen die einzelnen Elektrodenflächen durch nicht-leitende Stege voneinander getrennt werden. Dies wird eine untere Grenze für die Fläche der einzelnen Elektrodenflächen darstellen, da mit zunehmendem Verhältnis von nicht leitenden Stegen zu der Metallisierungsfläche die wirksame Elektrodenfläche abnimmt und somit die auch die Empfindlichkeit der Sensorstruktur zurückgeht. Für eine hohe Empfindlichkeit der Sensorstruktur ist es notwendig, wenn möglich alle Elektrodenflächen irgendwie zu verschalten, wobei es aber genauso abhängig von der erwünschten Druck/Kapazitäts-Abhängigkeit bzw. Kraft/Kapazitäts-Abhängigkeit genauso möglich ist, nur einige der prinzipiell zur Verfügung stehenden Kondensatoren zu verwenden, und die anderen unbenutzt zu lassen.

Fig. 3 zeigt einen Querschnitt durch die Druck- oder Kraftsensorstruktur von Fig. 2. Insbesondere ist in Fig. 3 der Aufbau der Gegenstruktur als Mehrschichtstrukturierung angedeutet. Die Gegenstruktur besteht dabei beispielsweise aus vier Schichten 14a bis 14d, wobei auf der Schicht 14d die ersten und zweiten Elektrodenflächen 18a, 18b und 20a, 20b vorgesehen sind, denen entsprechende dritte Elektrodenflächen 18c und 20c gegenüber liegen. In Fig. 3 ist die Situation gezeigt, bei der die beiden Kondensatoren 18 und 20 parallel geschaltet sind. Diese Parallelschaltung wird mittels auf den Mehrschichtstrukturen vorgesehenen Leiterbahnen erreicht, die durch Durchgangslöcher in den Mehrschichtstrukturen von einer Schicht zur nächsten Schicht verbunden sind. Indem eine Mehrschichtstrukturierung für die feste Gegenstruktur 14 verwendet wird, ist es möglich, nur eine einzige Auswerteschaltung 22 für alle beliebigen Anwendungen einzusetzen, da die Leiterbahnen auf der obersten Schicht 14a, auf der die integrierte Schaltung 22 direkt befestigt werden kann, derart gestaltet werden kann, daß entsprechende Elemente mit den bestimmten dafür vorgesehenen Eingängen der integrierten Schaltung 22 verbunden werden. Für Fachleute ist es offensichtlich, daß in Abhängigkeit von den erwarteten bzw. notwendigen Auslenkungen der Membran die Membran selbst ebenfalls den mehrschichtigen Aufbau haben kann, während die Gegenstruktur fest ist und keine Kontaktierungen hat. Dies wird jedoch der eher seltenere Anwendungsfall sein.

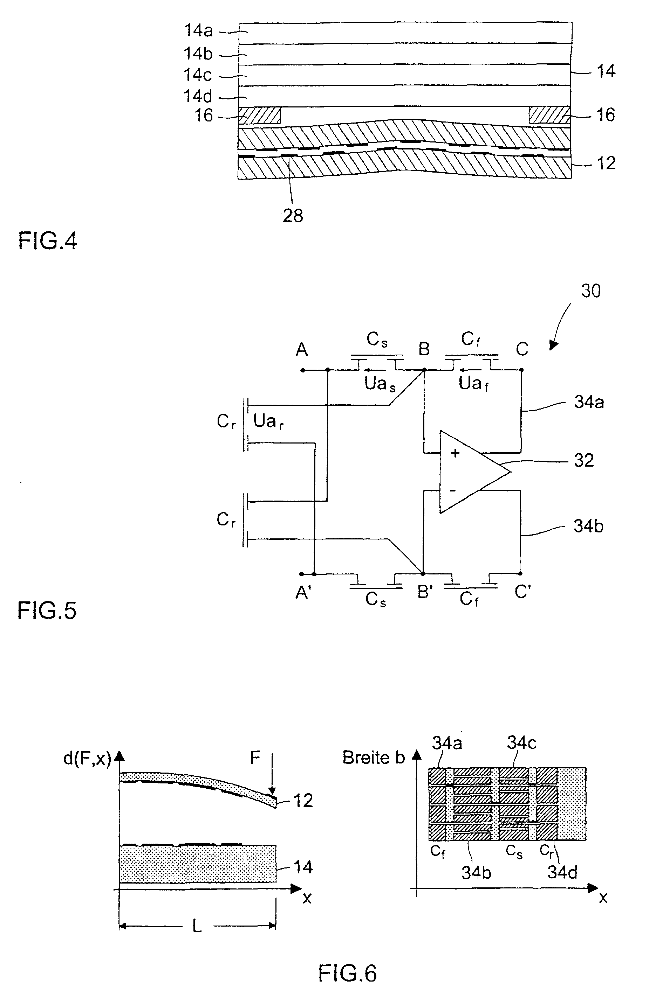

Fig. 4 zeigt ein weiteres Beispiel für eine erfindungsgemäße Druck- oder Kraftsensorstruktur, wobei die Membran 12 als Mehrschichtaufbau ausgeführt ist, jedoch nicht nur zum Zusammenschalten mehrerer Elemente, sondern zum Aufnehmen eines Abschirmgitters 28 innerhalb eines "Sandwich"-Aufbaus, wobei dieser "Sandwich"-Aufbau sowohl in der Gegenstruktur 14 als auch in der Membran 12, wie es in Fig. 4 gezeigt ist, vorhanden seien kann. Dieses Abschirmgitter bzw. eine durchgehende Abschirmbeschichtung dient zum elektromagnetischen Entkoppeln von äußeren Feldern oder Einflüssen.

Fig. 5 zeigt eine Auswerteschaltung 30, die vorzugsweise mit der Druck- oder Kraftsensorstruktur 10 gemäß der vorliegenden Erfindung eingesetzt werden kann. Die Auswerteschaltung 30 umfaßt einen Operationsverstärker 32 mit zwei Rückkopplungszweigen 34a, 34b, wobei beide Rückkopplungszweige jeweils eine Rückkopplungskapazität C_{f} (f=feedback) umfassen. Mit dem Operationsverstärker 32 sind ferner über die Knoten B und B' Referenzkapazitäten Cᵣ und Signalkapazitäten Cₛ verbunden. Es sei darauf hingewiesen, daß sowohl Cᵣ als auch Cₛ als auch C_{f} Kapazitäten von zusammengeschalteten Kondensatoren sein können, wie es durch die Pfeile U_{af}, Uₐₛ und Uₐᵣ symbolisch angedeutet ist. So könnte beispielsweise zur Erzeugung einer Kapazität C_{f} die Zusammenschaltung 24 verwendet werden, während für die Erzeugung einer Signalkapazität Cₛ die Zusammenschaltung 26 und zur Erzeugung einer Referenzkapazität Cᵣ eine weitere Zusammenschaltung eingesetzt werden.

Das Schaltungsprinzip, das Fig. 5 zugrundeliegt, ist bekannt und muß daher nicht weiter ausgeführt werden. Es sei jedoch darauf hingewiesen, daß an den Eingängen A und A' der Schaltung 30 eine Gleichspannung anliegt, die abwechselnd umgepolt wird. Das Ausgangssignal, das die gewünschte Abhängigkeit besitzt, d. h. Uₐ' (Fig. 1) wird an den Knoten C und C' abgenommen. In Fig. 5 wurden aus Übersichtlichkeitsgründen ferner notwendige Schalter weggelassen, da Fig. 5 auf dem "Switched-Capacitor"-Prinzip aufbaut, das in der Technik bekannt ist und darauf basiert, daß sich in der gezeichneten Konfiguration geschaltete Kapazitäten analog zu Widerständen verhalten. Die Doppelbeschaltung des Operationsverstärkers 32 hat den Vorteil, daß unter Verwendung des Differenzpfadprinzips eine geringere Betriebsspannungsabhängigkeit vorhanden ist. Das Ausgangssignal Uₐ' an den Knoten C und C' ist dabei proportional zu dem Quotienten (Cₛ-Cᵣ/C_{f}). Cₛ, C_{f} und Cᵣ sind dabei, wie es bereits erwähnt wurde, entsprechende Gruppen der Kondensatoren, die durch Parallel- und/oder Serienschaltung einzelner Kondensatoren gebildet sein können, wobei ein einzelner Kondensator aus zumindest einer ersten und einer zweiten Elektrodenfläche und zusätzlich einer dritten Elektrodenfläche besteht.

Die nachfolgend dargelegten Realisierungsbeispiele der Druck- oder Kraftsensorstruktur gemäß der vorliegenden Erfindung und die erhaltenen Meßergebnisse bzw. Simulationsergebnisse basieren auf einer in den Fig. 1 bis 4 dargestellten Druck- oder Kraftsensorstruktur, die mit der in Fig. 5 gezeigten Schaltung verbunden ist.

Fig. 6 zeigt das erfindungsgemäße Konzept anhand eines Biegebalkens, der zur Membran 12 analog ist und durch eine Kraft F an seinem Ende belastet wird, und dem ein Sensorgrundkörper 14 gegenüberliegt, wobei die Metallisierungen nur schematisch eingezeichnet sind. Eine zur Anpassung an verschiedene Kennlinienformen geeignete Elektrodenaufteilung ist beispielsweise in Fig. 6 gezeigt. Diese Elektrodenaufteilung könnte auf der Balkenunterseite angebracht werden. Die zur Verfügung stehende Fläche wird dabei in eine Anzahl von Querstreifen 34a bis 34d unterteilt, wobei die Biegung, wie es die Biegelinie vorgibt, am Streifen 34a am stärksten seien wird, während sie zum Streifen 34d abnimmt. Die Querstreifen können nun in eine beliebige Anzahl von Längsstreifen unterteilt werden, wobei sich die drei Meßkapazitäten Cₛ, C_{f} und Cᵣ bei dem in Fig. 6 gezeigten Beispiel aus jeweils vier Elektrodenstreifen mit unterschiedlicher Länge und Breite zusammensetzen. Die Länge und Breite der einzelnen Streifen und die Aufteilung auf die drei Meßkapazitäten bestimmt nun das Ausgangssignal des Sensors, wobei die gewünschte Druck/Kapazitäts-Abhängigkeit bzw. Kraft/Kapazitäts-Abhängigkeit eingestellt werden kann. Das Fig. 6 zugrundeliegende Elektrodenflächenmuster wird nun im Gegensatz zu Fig. 2 kein Array aus Kreisflächensegmenten sein, sondern ein Array aus Quadraten, die über die Gegenstruktur 14 oder den Biegebalken 12 parallel geschaltet werden, um die rechts in Fig. 6 gezeigten Flächen nachbilden zu können.

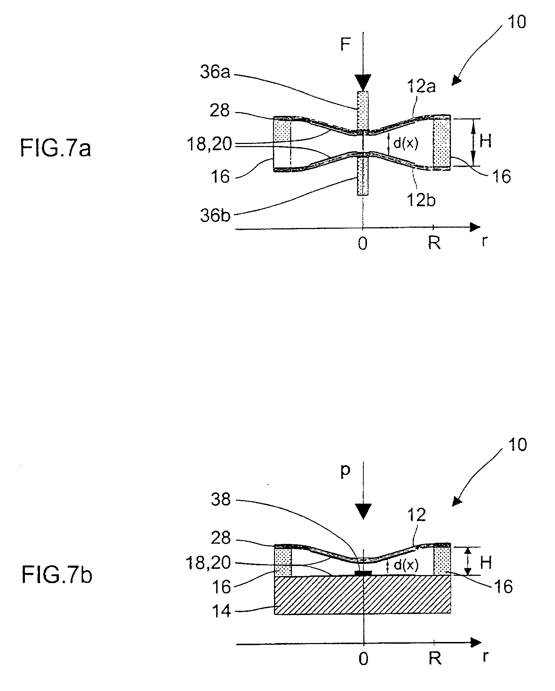

Fig. 7a zeigt ein weiteres Beispiel für eine Druck- oder Kraftsensorstruktur 10 gemäß der vorliegenden Erfindung, welche eine Doppelmembran 12a und 12b aufweist. Beide Membranen sind zusätzlich mit einem Stößel 36a, 36b zur Kraftübertragung versehen. Außerdem haben beide Membranen einen "Sandwich"-artigen Aufbau, in dem ein Abschirmgitter 28 aufgenommen ist, sowie sowohl an der oberen Membran 12a als auch an der unteren Membran 12b eine Metallisierung zum Bilden von Kondensatoren 18, 20. Die einzelne Elektrodenflächenaufteilung ist aus Übersichtlichkeitsgründen in Fig. 7 nicht dargestellt. Bei dem in Fig. 7a gezeigten Beispiel mit Doppelmembran ist die in Zusammenhang mit Fig. 1 beschriebene Serienschaltung von zwei Elementar-Kapazitäten von besonderem Vorteil, da eine Kontaktierung nur auf einer Membran 12a oder 12b durchgeführt werden muß. Die Zusammenschaltung könnte hier ebenfalls durch eine Mehrschichtstrukturierung an einer Membran realisiert werden. Eher wünschenswert ist hier jedoch eine Zusammenschaltung mittels Leiterbahnen, wenn die Membranen sehr empfindlich reagieren sollen und damit nicht besonders dick sein dürfen.

Fig. 7b zeigt im Gegensatz zu Fig. 7a keinen Kraftsensor sondern einen Drucksensor 10, der ebenfalls eine Membran 12 mit Abschirmgitter 28 und Metallisierung aufweist, der eine Metallisierung der Gegenstruktur 14 gegenüberliegt, um wieder Kondensatoren 18, 20 zu bilden. Nur schematisch ist in Fig. 7b eine Abstützungsstruktur 38 eingezeichnet, die bei allen anderen erfindungsgemäßen Sensoren ebenfalls eingesetzt werden kann, um die Membran am Rande ihres zulässigen Auslenkungsbereiches abzustützen, um eine Zerstörung derselben bei Überlast zu vermeiden.

Auch in Fig. 7b ist aus Übersichtlichkeitsgründen nicht die Strukturierung der Metallisierungen an Membran und Gegenstruktur eingezeichnet.

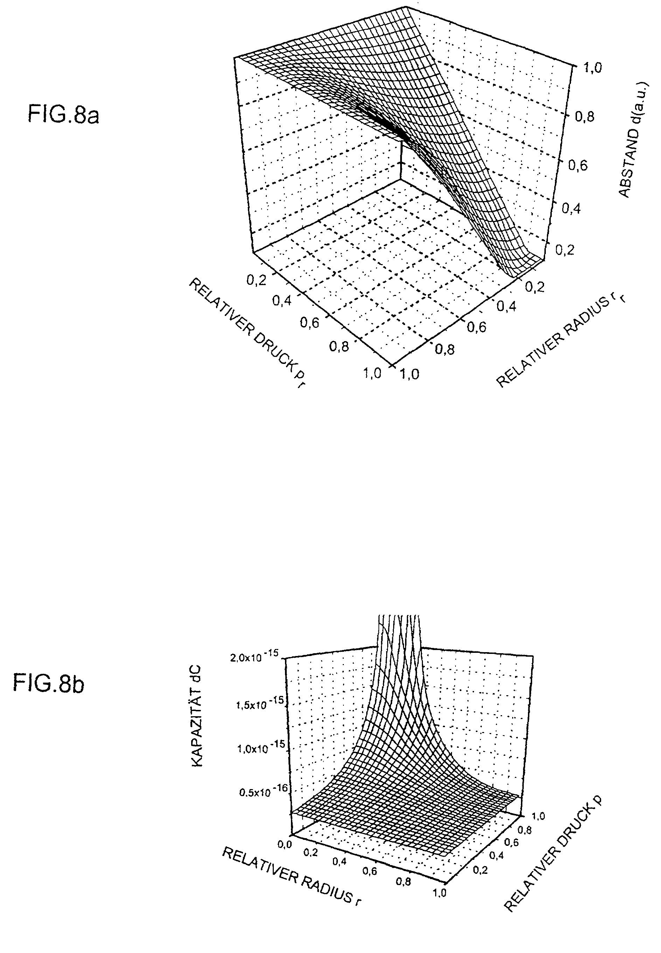

Fig. 8a zeigt das Ergebnis einer Simulation der Auslenkung der Membran von Fig. 7b, wobei der Abstand eines Flächenelements der Membran 12 zu der Gegenstruktur 14 abhängig von dem Ort des Flächenelements auf der Membran 12 und dem angelegten Druck variiert.

Fig. 8b zeigt die numerische Simulation der Kapazität jedes Flächenelements in Abhängigkeit der Position (relativer Radius) als auch des angelegten Drucks. Jedes Flächenelement, das in Fig. 8b simuliert ist, könnte dabei einer dritten Elektrodenfläche bzw, einer ersten und zweiten Elektrodenfläche, d. h. einem Einzelkondensator entsprechen.

In Fig. 8b ist somit der Kapazitätsbeitrag jedes einzelnen Kondensators dargestellt, wobei zur Festlegung eines Kapazitätsverlaufs bestimmte Einzelkondensatoren parallel und/oder in Serie geschaltet werden können, wie es beispielsweise durch eine numerische Optimierung berechnet werden kann. Damit kann mittels einer entsprechenden geometrischen Aufteilung der Elektrodenflächen eine gewünschte Ausgangskennlinie vorzugsweise unter Verwendung einer Auswerteschaltung mit Rückkopplungszweig in weiten Grenzen eingestellt werden.

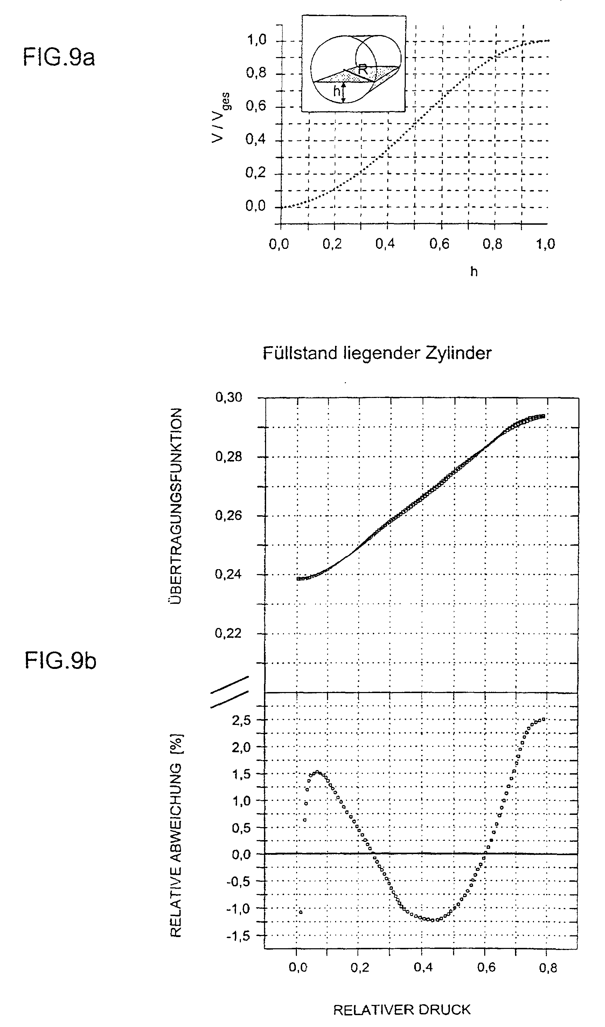

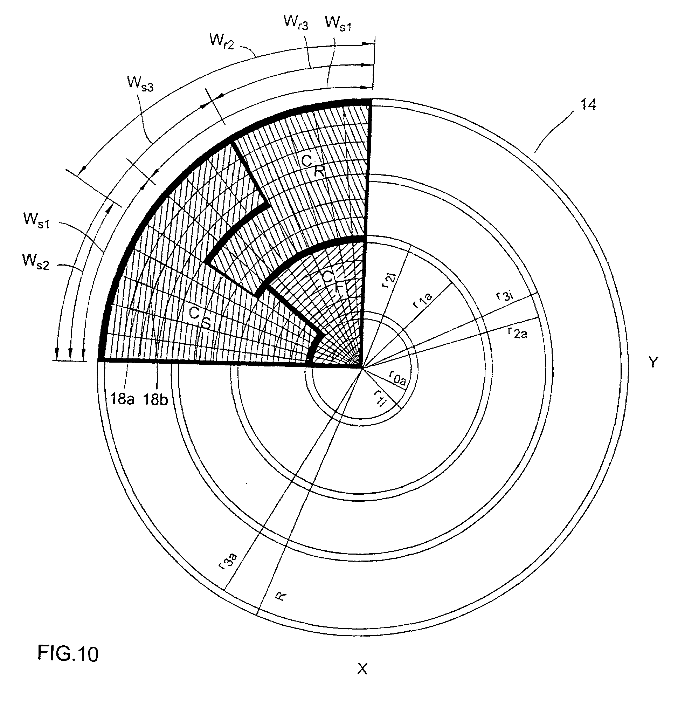

Ein Anwendungsbereich zur Nachbildung einer nichtlinearen Übertragungsfunktion wird im nachfolgenden anhand der Fig. 9a, 9b und 10 erläutert. Selbstverständlich kann mit der vorliegenden Erfindung auch der Spezialfall einer linearen Kennlinie realisiert werden.

Fig. 9a zeigt die Füllstandskurve eines liegenden Zylinders. Insbesondere ist in Fig. 9a der Anteil des Füllvolumens am Gesamtvolumen als Funktion der Füllhöhe h des Zylinders dargestellt. Um eine Druck- oder Kraftsensorstruktur einsetzen zu können, die die in Fig. 9a gezeigte Füllstandskurve nachbildet, muß dieselbe eine entsprechende nichtlineare Abhängigkeit des Ausgangssignals von dem im Tank vorhandenen Druck haben. Dabei muß mittels eines geeigneten Optimierungsverfahrens das Ausgangssignal der in Fig. 5 gezeichneten Switched-Capacitor-Schaltung, die eine Übertragungsfunktion aufweist, die proportional zum Quotienten (Cₛ-Cᵣ)/C_{f} ist, an die Füllstandskurve angepaßt bzw. mit der derselben gefittet werden. Die obere Grafik in Fig. 9 stellt dabei die Übertragungsfunktion und die angepaßte Funktion dar, während die untere Grafik stark hervorgehoben die relative Abweichung in Prozent zwischen der Füllstandskurve und der optimierten Sensorausgangskurve in Abhängigkeit vom relativen Druck auf dem Sensor darstellt.

Fig. 10 zeigt eine optimierte Druck- oder Kraftsensorstruktur, mittels der die Ergebnisse von Fig. 9b realisiert wurden. Die in Fig. 9b im oberen Teil dargestellte Übertragungsfunktion wurde mittels einer kreisrunden Membran und einer kreisrunden Gegenstruktur 14 erreicht, wobei aus Übersichtlichkeitsgründen in Fig. 10 lediglich die Gegenstruktur schematisch dargestellt ist. In Fig. 10 sind die Elektrodenflächen der Kondensatoren C_{S}, C_{R} und C_{F} für die in Fig. 5 gezeigte Schaltung in einem Quadranten eingezeichnet. Die gesamte Sensorstruktur ergibt sich durch Spiegelung des beschrifteten Quadrants an der X-Achse und durch Spiegelung des resultierenden Halbkreises an der Y-Achse. In Fig. 10 ist ferner ein Elementarkondensator durch die erste und zweite Elektrodenfläche 18a und 18b angedeutet, dem eine entsprechende dritte Elektrodenfläche der Membran (nicht gezeigt) gegenüberliegt, um diesen Elementarkondensator zu bilden.

Die berechneten Flächen der Kapazitäten C_{S}, C_{R} und C_{F} werden durch Parallelschalten entsprechender Elementarkondensatoren 18 mittels einer in Fig. 3 dargestellten Mehrschichtstruktur 14a bis 14d aufgebaut bzw. zusammengesetzt. Es sei darauf hingewiesen, daß die in Fig. 10 gezeigte Elementarelektrodenflächenaufteilung relativ fein ist und eine sehr feine Anpassung an eine gewünschte Kennlinie erlaubt. Für die in Fig. 10 gezeigte relativ grobe Elekrodenstruktur würde auch eine grobere Elektrodenflächenaufteilung genügen. Die in Fig. 10 dargestellten Dimensionierungen ergeben sich folgendermaßen, wobei w für ein Kreissegment steht, während r für den relativen Radius, d. h. einen Radius bezogen auf den Gesamtradius R der Membran, steht. Im einzelnen ergaben sich folgende Größen:

**Tabelle**

| Stegbreite: 0,20 mm | | | |
|---|---|---|---|
| r_{Oa} = 2,30 mm | r₁ₐ = 5,00 mm | r₂ₐ = 8,00 mm | r₃ₐ = 9,09 mm |
| r_{Oi} = 0,73 mm | r₁ᵢ = 2,66 mm | r₂ᵢ = 5,36 mm | r₃ᵢ = 8,36 mm |
| | | | |
| w_{sO} = 0,0° | wₛ₁ = 39,0° | wₛ₂ = 32,0° | wₛ₃ = 60,0° |
| w_{fO} = 90,0° | w_{f1} = 51,0° | w_{f2} = 0,0° | w_{f3} = 0,0° |
| w_{rO} = 0,0° | wᵣ₁ = 0,0° | wᵣ₂ = 58,0° | wᵣ₃ = 30,0° |

Zusammenfassend läßt sich also feststellen, daß die Druck- oder Kraftsensorstrukturen gemäß der vorliegenden Erfindung mehrere Vorteile aufweisen. Bei bestimmten Ausführungsbeispielen mit einer Membran und einer festen Gegenstruktur müssen die "aktiven" Elektroden nicht mehr galvanisch angeschlossen werden. Weiterhin erlaubt eine generelle Berechnungsmethode die Kennlinien-Transformation der Sensorstrukturen in weiten Grenzen zur Kombination von entsprechend geformten isolierten Elektrodenflächen, wobei für die beschriebene Auswerteschaltung vorzugsweise drei Kondensatorgruppen eingesetzt werden. Durch Aufbau der kapazitiven Sensoren im "Sandwich"-System kann auf flexible und günstige Art und Weise die entsprechende Serien- oder Parallelschaltung der einzelnen Kondensatoren einer Gruppe und auch die Gruppenzusammenfassung durchgeführt werden. Ein Abschirmgitter oder auch eine durchgehende Abschirmbeschichtung auf bzw. innerhalb der "Sandwich"-Strukturen ist sowohl in der Gegenstruktur als auch in der Membran möglich, um äußere Einflüsse zu mindern. Besonders in Verbindung mit einer "Switched-Capacitor"-Auswerteschaltung, die vorzugsweise direkt auf der Gegenstruktur vorgesehen ist, ist die "Verdrahtungs"-Möglichkeit des Schichtaufbaus von besonderem Vorteil. Außerdem erlaubt die erfindungsgemäße Struktur auch die Verwendung von Glasmembranen, auf die lediglich die dritten Elektrodenflächen aufgedampft werden müssen, und bei denen keinerlei Verdrahtung der Membran notwendig ist. Die Elektrodenstrukturen lassen sich vorzugsweise mit wenigen Angaben, wie z. B. Länge, Breite, Abstand bzw. Winkel, Radius definieren.

## Patentansprüche

1. Druck- oder Kraftsensorstruktur (10) mit einer Membran (12) und einer Gegenstruktur (14), wobei auf der Membran (12) und/oder der Gegenstruktur (14) ein Array von Elementar-Elektroden (18a - 18c, 20a - 20c) zur Bildung von Elementar-Kondensatoren (18, 20) enthalten ist,
wobei zur Festlegung einer gewünschten Druck/Kapazitäts-Abhängigkeit bzw. Kraft/Kapazitäts-Abhängigkeit aus einer Vielzahl von Druck/Kapazitäts-Abhängigkeiten bzw. Kraft/Kapazitäts-Abhängigkeiten die Elementar-Kondensatoren (18, 20) seriell und/oder parallel verschaltbar sind.

2. Druck- oder Kraftsensorstruktur (10) gemäß Anspruch 1, bei der ein Elementar-Kondensator (18, 20) durch zwei Elementar-Elektrodenflächen (18a, 18b, 20a, 20b) auf entweder der Membran (12) oder der Gegenstruktur (14) und eine dritte Elementar-Elektrodenfläche (18c, 20c) auf der Gegenstruktur (14) bzw. der Membran (12) gebildet ist, wobei die Kapazität des Elementar-Kondensators durch eine Serienschaltung zweier Kapazitäten (Ca, Cb bzw. Cc, Cd) zwischen der ersten (18a, 20a) und der dritten (18c, 20c) sowie der zweiten (18b, 20b) und der dritten (20d) Elementar-Elektrodenfläche gebildet ist.

3. Druck- oder Kraftsensorstruktur (10) gemäß Anspruch 2, bei der die dritte Elementar-Elektrodenfläche (18c, 20c) die erste und die zweite Elementar-Elektrodenfläche (18a, 18b; 20a, 20b) überlappt.

4. Druck- oder Kraftsensorstruktur (10) gemäß Anspruch 2 oder 3, bei der eine solche Anzahl von Kondensatoren (18, 20) vorgesehen ist, daß der gesamte aktive Bereich der Membran (12) und der Gegenstruktur 14 durch viele erste und zweite bzw. durch dritte Elementar-Elektrodenflächen (18a - 18c, 20a - 20c) bedeckt ist, wobei die einzelnen Elementar-Elektrodenflächen voneinander isoliert sind.

5. Druck- oder Kraftsensorstruktur (10) gemäß einem der Ansprüche 2 bis 4, bei der die ersten und die zweiten Elementar-Elektrodenflächen (18a, 18b, 20a, 20b) Kreissegmentform haben.

6. Druck- oder Kraftsensorstruktur (10) gemäß einem der vorhergehenden Ansprüche, bei der sowohl die Membran (12) als auch die Gegenstruktur (14) auslenkbar sind.

7. Druck- oder Kraftsensorstruktur (10) gemäß einem der Ansprüche 1 bis 5, bei der die Gegenstruktur (14) feststehend ist und allein die Membran (12) auslenkbar ist.

8. Druck- oder Kraftsensorstruktur (10) gemäß Anspruch 7, bei der die Serien- und/oder Parallelschaltung der Elementar-Kondensatoren (18, 20) durch die Gegenstruktur (14) realisiert ist.

9. Druck- oder Kraftsensorstruktur (10) gemäß Anspruch 8, bei der die Gegenstruktur einen Mehrschichtaufbau (14a - 14d) aufweist, wobei Leiterbahnen und die Durchgangskontaktierungen von einzelnen Schichten des Mehrschichtaufbaus derart ausgeführt sind, daß die Elementar-Kondensatoren (18, 20) zur Festlegung der gewünschten Druck/Kapazitäts- bzw. Kraft/Kapazitäts-Abhängigkeit parallel geschaltet sind.

10. Druck- oder Kraftsensorstruktur (10) gemäß einem der vorhergehenden Ansprüche, bei der die Membran (12) und/oder die Auflagestruktur (14) Sandwich-artig aufgebaut ist bzw. sind, und eine Abschirmeinrichtung (28) zur Abschirmung äußerer Einflüsse aufweist bzw. aufweisen.

11. Druck- oder Kraftsensorstruktur (10) gemäß einem der Ansprüche 4 bis 10, bei der eine Auswerteschaltung (22) auf der von der Membran (12) weg gerichteten Seite der Gegenstruktur (14) angeordnet ist.

12. Druck- oder Kraftsensorstruktur (10) gemäß einem der Ansprüche 4 bis 10, bei der eine Elementar-Kondensatorgruppe (Cs) zur Signalerfassung, eine Elementar-Kondensatorgruppe (Cf) zur Rückkoppelung und eine Elementar-Kondensatorgruppe. (Cr) zur Referenz vorgesehen sind.

13. Druck- oder Kraftsensorstruktur (10) gemäß Anspruch 12, bei der die Referenz-Elementar-Kondensatorgruppe (Cr) in einem weniger stark auslenkbaren Bereich angeordnet ist, während sich die Rückkopplungs-Elementar-Kondensatorgruppe (Cf) in einem stark auslenkbaren Bereich angeordnet ist.

14. Druck- oder Kraftsensorstruktur (10) gemäß einem der vorhergehenden Ansprüche, bei der die Membran (14) als Glasmembran ausgeführt ist.

15. Verfahren zum Herstellen einer Druck- oder Kraftsensorstruktur (10) mit einer Membran (12) und einer Gegenstruktur (14), wobei die Membran (12) und/oder die Gegenstruktur (14) ein Array von Elementar-Kondensatoren (18, 20) bildenden Elementar-Elektrodenflächen (18a - 18c, 20a - 20c) aufweist, mit folgenden Schritten:
Auswählen einer Druck/Kapazitäts- bzw. Kraft/Kapazitäts-Abhängigkeit aus einer Vielzahl von Druck/Kapazitäts-Abhängigkeiten bzw. Kraft/Kapazitäts-Abhängigkeiten;
Optimieren der Übertragungsfunktion einer zur realisierenden Druck- oder Kraftsensorstruktur (10), um eine simulierte Druck/Kapazitäts- bzw. Kraft/Kapazitäts-Abhängigkeit zu erhalten, die der ausgewählten Abhängigkeit zumindest nahekommt;
Erzeugen der im Schritt des Optimierens erhaltenen Übertragungsfunktion durch Parallel- und/oder Seriell-Schalten der Elementar-Kondensatoren (18, 20).

16. Verfahren nach Anspruch 17, bei dem die Membran (12) und die Gegenstruktur (14) unverändert sind und der Schritt des Erzeugens durch einen Mehrschichtaufbau der Gegenstruktur bewirkt wird.

17. Verfahren nach Anspruch 18, bei dem die Gegenstruktur (14) fest ist und die Mehrschichtstruktur (14a - 14d) aufweist, wobei auf der Seite der Mehrschichtstruktur, die der Membran zugewandt ist, eine Vielzahl von kreissegmentförmigen Elementar-Elektrodenflächen angeordnet ist, wobei sich zwei kreissegmentförmige Elementar-Elektrodenflächen (18a, 18b, 20a, 20b) der Gegenstruktur (14) und eine dritte Elementar-Elektrodenfläche (18c, 20c) der Membran gegenüberliegen, um einen Elementar-Kondensator (18, 20) zu bilden.

## Claims

1. A pressure or force sensor structure (10) comprising a membrane (12) and a counter-structure (14), the membrane (12) and/or the counter-structure (14) containing an array of elementary electrodes (18a - 18c, 20a - 20c) thereon for establishing elementary capacitors (18, 20),
wherein, for determining a desired pressure/capacitance dependence or force/capacitance dependence, respectively, from a multiplicity of pressure/capacitance dependences or force/capacitance dependences, respectively, said elementary capacitors (18, 20) are adapted to be connected in series and/or in parallel.

2. The pressure or force sensor structure (10) of claim 1, wherein an elementary capacitor (18, 20) is constituted by two elementary electrode areas (18a, 18b, 20a, 20b) either on the membrane (12) or on the counter-structure (14) and by a third elementary electrode area (18c, 20c) on the counter-structure (14) or the membrane (12), respectively, with the capacitance of said elementary capacitor being constituted by a series connection of two capacitances (Ca, Cb and Cc, Cd, respectively) between the first (18a, 20a) and the third (18c, 20c) as well as the second (18b, 20b) and the third (20d) elementary electrode areas.

3. The pressure or force sensor structure (10) of claim 2, wherein the third elementary electrode area (18c, 20c) overlaps the first and second elementary electrode areas (18a, 18b; 20a, 20b).

4. The pressure or force sensor structure (10) of claim 2 or 3, wherein such a number of capacitors (18, 20) is provided that the entire active portion of the membrane (12) and of the counter-structure (14) is covered by many first and second and, respectively, third elementary electrode areas (18a - 18c, 20a - 20c), with the individual elementary electrode areas being isolated from each other.

5. The pressure or force sensor structure (10) of any of claims 2 to 4, wherein the first and second elementary electrode areas (18a, 18b, 20a, 20b) have the shape of segments of a circle.

6. The pressure or force sensor structure (10) of any of the preceding claims, wherein both the membrane (12) and the counter-structure (14) are deflectable.

7. The pressure or force sensor structure (10) of any of claims 1 to 5, wherein the counter-structure (14) is fixed and only the membrane (12) is deflectable.

8. The pressure or force sensor structure (10) of claim 7, wherein the series and/or parallel connection of the elementary capacitors (18, 20) is realized by the counter-structure (14).

9. The pressure or force sensor structure (10) of claim 8, wherein the counter-structure comprises a multilayer construction (14a - 14d), with conductive tracks and the through-contacting of individual layers of the multilayer construction being designed such that the elementary capacitors (18, 20) are connected in parallel for determining the desired pressure/capacitance dependence or force/capacitance dependence, respectively.

10. The pressure or force sensor structure (10) of any of the preceding claims, wherein the membrane (12) and/or the supporting structure (14) is/are of sandwich-like construction and has/have a shielding means (28) for shielding external effects.

11. The pressure or force sensor structure (10) of any of claims 4 to 10, wherein an evaluation circuit (22) is disposed on the side of the counter-structure (14) directed away from the membrane (12).

12. The pressure or force sensor structure (10) of any of claims 4 to 10, wherein there are provided an elementary capacitor group (Cs) for signal detection, an elementary capacitor group (Cf) for feedback and an elementary capacitor group (Cr) for reference.

13. The pressure or force sensor structure (10) of claim 12, wherein the reference elementary capacitor group (Cr) is arranged in a region permitting a lesser extent of deflection, whereas the feedback elementary capacitor group (Cf) is arranged in a region permitting a high extent of deflection.

14. The pressure or force sensor structure (10) of any of the preceding claims, wherein the membrane (14) is a glass membrane.

15. A method for producing a pressure or force sensor structure (10) comprising a membrane (12) and a counter- structure (14), the membrane (12) and the counter- structure having an array of elementary electrode areas (18a - 18c, 20a - 20c) establishing elementary capacitors (18, 20), said method comprising the following steps:
selecting a pressure/capacitance dependence or force/ capacitance dependence, respectively, from a multiplicity of pressure/capacitance dependences or force/capacitance dependences, respectively;
optimizing the transmission function of a pressure or force sensor structure (10) to be realized, in order to obtain a simulated pressure/capacitance dependence or force/capacitance dependence, respectively, which at least approximates the selected dependence;
generating the transmission function, obtained in the optimizing step, by parallel and/or series connection of the elementary capacitors (18, 20).

16. The method of claim 17, wherein the membrane (12) and the counter-structure (14) are unchanged and said generating step is effected by a multilayer construction of the counter-structure.

17. The method of claim 18, wherein the counter-structure (14) is fixed and has the multilayer structure (14a - 14d), with a multiplicity of elementary electrode areas in the shape of segments of a circle being disposed on the side of the multilayer structure facing the membrane, with two circle segment-shaped elementary electrode areas (18a, 18b, 20a, 20b) of the counter-structure (14) and a third elementary electrode area (18c, 20c) of the membrane being located opposite each other so as to establish an elementary capacitor (18, 20).

## Revendications

1. Structure détectrice de pression ou de force (10) avec une membrane (12) et une contre-structure (14), sur la membrane (12) et/ou la contre-structure (14) étant contenue une rangée d'électrodes élémentaires (18a à 18c, 20a à 20c) destinées à former des condensateurs élémentaires (18, 20),
les condensateurs élémentaires (18, 20) pouvant, pour fixer une dépendance de la pression/capacité ou une dépendance de la force/capacité souhaitée parmi une pluralité de dépendances de la pression/capacité ou de dépendances de la force/capacité, être connectés en série et/ou en parallèle.

2. Structure détectrice de pression ou de force (10) selon la revendication 1, dans laquelle un condensateur élémentaire (18, 20) est formé par deux surfaces d'électrode élémentaires (18a, 18b, 20a, 20b) sur soit la membrane (12), soit la contre-structure (14), et une troisième surface d'électrode élémentaire (18c, 20c) sur la contre-structure (14) ou sur la membrane (12), la capacité du condensateur élémentaire étant formée par une commutation en série de deux capacités (Ca, Cb ou Cc, Cd) entre la première (18a, 20a) et la troisième (18c, 20c) ainsi que la seconde (18b, 20b) et la troisième (20d) surface d'électrode élémentaire.

3. Structure détectrice de pression ou de force (10) selon la revendication 2, dans laquelle la troisième surface d'électrode élémentaire (18c, 20c) recouvre la première et la seconde surface d'électrode élémentaire (18a, 18b ; 20a, 20b).

4. Structure détectrice de pression ou de force (10) selon la revendication 2 ou 3, dans laquelle est prévu un nombre de condensateurs (18, 20) tel que toute la zone active de la membrane (12) et de la contre-structure (14) est couverte par de nombreuses premières et secondes ou par des troisièmes surfaces d'électrode élémentaires (18a à 18c, 20a à 20c), les différentes surfaces d'électrode élémentaires étant isolées l'une de l'autre.

5. Structure détectrice de pression ou de force (10) selon l'une des revendications 2 à 4, dans laquelle les premières et secondes surfaces d'électrode élémentaires (18a, 18b ; 20a, 20b) sont en forme de segment de cercle.

6. Structure détectrice de pression ou de force (10) selon l'une des revendications précédentes, dans laquelle tant la membrane (12) que la contre-structure (14) peuvent être déviées.

7. Structure détectrice de pression ou de force (10) selon l'une des revendications 1 à 5, dans laquelle la contre-structure (14) est fixe et seule la membrane (12) peut être déviée.

8. Structure détectrice de pression ou de force (10) selon la revendication 7, dans laquelle la commutation en série et/ou en parallèle des condensateurs élémentaires (18, 20) est réalisée par la contre-structure (14).

9. Structure détectrice de pression ou de force (10) selon la revendication 8, dans laquelle la contre-structure présente une construction à couches multiples (14a à 14d), des chemins de câble et les contacts de passage étant réalisés par des couches individuelles de la construction à couches multiples, de soue que les condensateurs élémentaires (18, 20) sont, pour fixer la dépendance de la pression/capacité ou de la force/capacité souhaitée, commutés en parallèle.

10. Structure détectrice de pression ou de force (10) selon l'une des revendications précédentes, dans laquelle la membrane (12) et/ou la structure d'appui (14) est ou sont réalisées prises en sandwich et présente(nt) un dispositif de protection (28) destiné à protéger contre les influences extérieures.

11. Structure détectrice de pression ou de force (10) selon l'une des revendications 4 à 10, dans laquelle un circuit d'évaluation (22) est disposé sur le côté de la contre-structure (14) éloigné de la membrane (12).

12. Structure détectrice de pression ou de force (10) selon l'une des revendications 4 à 10, dans laquelle sont prévus un groupe de condensateurs élémentaires (Cs) destiné à capter le signal, un groupe de condensateurs élémentaires (Cf) destiné au couplage réactif et un groupe de condensateurs élémentaires (Cr) pour référence.

13. Structure détectrice de pression ou de force (10) selon la revendication 12, dans laquelle le groupe de condensateurs élémentaires de référence (Cr) est disposé dans une zone moins fortement déviable, tandis quc le groupe de condensateurs élémentaires de couplage réactif (Cf) est disposé dans une zone fortement déviable.

14. Structure détectrice de pression ou de force (10) selon l'une des revendications précédentes, dans laquelle la membrane (14) est réalisée sous forme de membrane en verre.

15. Procédé de fabrication d'une structure détectrice de pression ou de force (10) avec une membrane (12) et une contre-structure (14), la membrane (12) et/ou la contre-structure (14) présentant une rangée d'électrodes élémentaires (18a à 18c, 20a à 20c) formant des condensateurs élémentaires (18, 20), aux étapes suivantes consistant à :
choisir une dépendance de la pression/capacité ou de la force/capacité parmi une pluralité de dépendances de la pression/capacité ou de dépendances de la force/capacité ;
optimiser la fonction de transmission d'une structure détectrice de pression ou de force (10) à réaliser, pour obtenir une dépendance de la pression/capacité ou de la force/capacité simulée se rapprochant au moins de la dépendance choisie ;
générer la fonction de transmission obtenue à l'étape d'optimisation par la commutation en parallèle et/ou en série des condensateurs élémentaires (18, 20).

16. Procédé selon la revendication 17, dans lequel la membrane (12) et la contre-structure (14) sont inchangées et l'étape de génération est obtenue par une construction à couches multiples de la contre-structure.

17. Procédé selon la revendication 17, dans lequel la contre-structure est fixe et présente la structure à couches multiples (14a à 14d), du côté de la structure à couches multiples orientée vers la membrane étant disposées une pluralité de surfaces d'électrode élémentaire en forme de segment de cercle, deux surfaces d'électrode élémentaire en forme de segment de cercle (18a, 18b, 20a, 20b) de la contre-structure (14) et une troisième surface d'électrode élémentaire (18c, 20c) étant situées vis-à-vis de la membrane, pour former un condensateur élémentaire (18, 20).
